(19) Europäisches Patentamt
European Patent Office
Office européen des brevets

(11) **EP 2 404 736 B1**

(12) **EUROPÄISCHE PATENTSCHRIFT**

(45) Veröffentlichungstag und Bekanntmachung des Hinweises auf die Patenterteilung:
**23.11.2016 Patentblatt 2016/47**

(21) Anmeldenummer: **11005230.5**

(22) Anmeldetag: **28.06.2011**

(51) Int Cl.:
*B29C 55/00* (2006.01)    *B29C 33/68* (2006.01)
*B29C 55/14* (2006.01)    *B29C 37/00* (2006.01)
*B32B 27/32* (2006.01)    *B32B 27/34* (2006.01)
*B32B 27/36* (2006.01)    *B32B 27/40* (2006.01)
*B29K 67/00* (2006.01)    *B29K 105/16* (2006.01)
*C08J 5/18* (2006.01)    *C08J 5/24* (2006.01)
*C08L 67/00* (2006.01)    *C08L 61/20* (2006.01)
*C08L 61/28* (2006.01)    *C08L 63/00* (2006.01)

(54) **Biaxial orientierte matte Polyesterfolie mit hoher Rauheit**

Biaxially oriented matt polyester film with high roughness

Feuille de polyester matte orientée de manière biaxiale dotée d'un rugosité élevée

(84) Benannte Vertragsstaaten:
**DE FR GB IT PL TR**

(30) Priorität: **07.07.2010 DE 102010026328**

(43) Veröffentlichungstag der Anmeldung:
**11.01.2012 Patentblatt 2012/02**

(73) Patentinhaber: **Mitsubishi Polyester Film GmbH**
**65203 Wiesbaden (DE)**

(72) Erfinder:
• **Konrad, Matthias Dr.**
**65830 Kriftel (DE)**

• **Kuhmann, Bodo**
**65594 Runkel (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A2- 0 188 198    EP-A2- 0 510 654**
**US-A- 5 498 670    US-A- 5 648 159**

**Beschreibung**

Die Erfindung betrifft eine biaxial orientierte Polyesterfolie, die aus mindestens einer Schicht aufgebaut ist, die größer 2,5 Gew.-% sphärische Partikel mit einer Größe größer 5 $\mu$m enthält. Die Erfindung betrifft weiterhin ein Verfahren für die Herstellung der Folie und ihre Verwendung.

Die erfindungsgemäße Folie zeichnet sich durch eine gleichmäßige, hohe Oberflächenrauheit und einen niedrigen Glanz aus und ist für die Verwendung im industriellen Sektor gut geeignet.

Die Industrie hat Bedarf an Kunststofffolien wie z. B. biaxial orientierten Polyesterfolien, die eine sehr hohe Oberflächenrauheit aufweisen.

In der US-A-3,154,461 wird ein Verfahren zur Herstellung einer biaxial orientierten Folie aus thermoplastischem Kunststoff (z. B. Polyethylenterephthalat, Polypropylen) mit matter Oberfläche beansprucht, bei dem die Folie inkompressible Partikel (z. B. Calciumcarbonat, Siliciumdioxid) in einer Größe von 0,3 bis 20 $\mu$m und in einer Konzentration von 1 bis 25 Gew.-% enthält. Weiterhin ist in dieser Anmeldung die matte Folie, hergestellt nach dem erfindungsgemäßen Verfahren, beansprucht. Beispiele oder Folieneigenschaften werden nicht genannt.

In der EP-A-1 197 326 wird eine matte, biaxial orientierte Polyesterfolie beschrieben, die 1 bis 10 Gew.-% Partikel mit einer mittleren Partikelgröße von 2 bis 5 $\mu$m enthält. Die Mittlere Rauhigkeit $R_a$ dieser Folien liegt im Bereich von 0,15 bis 1,0 $\mu$m. In den Beispielen beträgt die maximale Rauheit 0,27 $\mu$m. Über die Gleichmäßigkeit der Rauheit werden keine Aussagen gemacht.

In der DE-A-3019073 wird eine Polyesterfolie beansprucht, die bis zu 4 Gew.-% Partikel eines Polymers mit einem Durchmesser von 0,1 bis 5 $\mu$m enthält. Die Partikel werden durch Pulverisieren eines Copolymerisats hergestellt. Daher ist davon auszugehen, dass weder die Partikelform noch die Größenverteilung gleichmäßig ist.

In der EP-A-0 188 198 wird eine Polyesterfolie beansprucht, die 0,005 bis 5,0 Gew.-% organische Partikel einer Größe von 0,01 bis 5 $\mu$m mit enger Partikelgrößenverteilung enthält und zusätzlich ein Nukleierungsmittel. Das Beispiel enthält lediglich 1000 ppm organische Partikel. Die Oberflächentopographie wird als gleichmäßig beschrieben, eine genaue Definition hierzu gibt es nicht.

Aufgabe der vorliegenden Erfindung war es, eine biaxial orientierte Polyesterfolie bereitzustellen, die eine gleichmäßig hohe Rauigkeit und einen niedrigen Glanz aufweist. Die Rauigkeit wird über die Parameter $R_a$ und $R_p$ definiert.

Die Aufgabe wird erfindungsgemäß durch eine biaxial orientierte Polyesterfolie mit mindestens einer sehr rauen, matten Schicht gelöst, die sphärische Partikel zur Erzeugung der Oberflächenrauigkeit enthält. Die Konzentration der sphärischen Partikel liegt bei $\geq$ 2,5 Gew.-%, bevorzugt bei $\geq$ 3,0 Gew.-%, besonders bevorzugt bei $\geq$ 3,5 Gew.-%, bezogen auf das Gesamtgewicht der Folie.

Bevorzugt weist die erfindungsgemäße Folie folgende Eigenschaften auf:

- Die mittlere Rauheit ($R_a$) der Folie ist $\geq$ 0,65 $\mu$m, bevorzugt $\geq$ 0,7 $\mu$m und besonders bevorzugt $\geq$ 0,8 $\mu$m.
- Die höchste Erhebung auf der Folie ($R_p$) ist $\leq$ 15 $\mu$m, bevorzugt $\leq$ 12 $\mu$m und besonders bevorzugt $\leq$ 10 $\mu$m und $\geq$ 7 $\mu$m, bevorzugt $\leq$ 7,5 $\mu$m und besonders bevorzugt $\leq$ 8 $\mu$m.
- Die Zahl der Erhebungen auf der Oberfläche der Folie, die $\geq$ 6,0 $\mu$m sind, ist größer 10 pro mm$^2$, bevorzugt größer 20 pro mm$^2$ und besonders bevorzugt größer 30 pro mm$^2$.
- Die Größe der sphärischen Partikel ist $\geq$ 5,0 $\mu$m, bevorzugt $\geq$ 5,5 $\mu$m und besonders bevorzugt $\geq$ 6,0 $\mu$m, aber $\leq$ 15 $\mu$m ($d_{50}$). Die sphärischen Partikel sind bevorzugt organisch. Die Ausdehnung der sphärischen Partikel sollte in alle Raumrichtungen ungefähr gleich groß sein, d. h. das Verhältnis von Länge zu Breite zu Höhe sollte nahe bei 1:1:1 liegen, bevorzugt bei (0,9-1,1): (0,9-1,1):1.
- Die Transparenz der Folie ist $\geq$ 50 %, bevorzugt $\geq$ 60 % und besonders bevorzugt $\geq$ 70%.
- Der Glanz der Folie, gemessen bei 60° und 85°, ist $\leq$ 50, bevorzugt $\leq$ 40 und besonders bevorzugt $\leq$ 30. Bevorzugt ist der Glanz bei 85° kleiner als der bei 60°.

Erfindungsgemäß ist die Folie vorzugsweise einschichtig aufgebaut.

Die Folie, die im vorliegenden Fall bevorzugt eine Monofolie ist, enthält bevorzugt mindestens 70 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexandimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer ganz bevorzugten Ausführungsform besteht die Folie aus Polyethylenterephthalat-Homopolymer.

Geeignete andere aliphatische Diole sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure oder Stilben-x,x'-dicarbonsäuren. Von den cycloaliphatischen Dicarbonsäuren sind Cyclohexandicarbonsäuren, insbesondere Cyclohexan-1,4-dicarbonsäure, zu nennen. Von den aliphatischen Dicarbonsäuren sind die ($C_3$ bis $C_{19}$)-Alkandisäuren besonders geeignet, wobei der Alkanteil geradkettig oder verzweigt sein kann.

Die gegebenenfalls vorhandenen zusätzlichen Schichten (Zwischen- oder Deckschichten) der Folie bestehen bevorzugt ebenfalls aus einem Polyester wie er oben beschrieben wurde, wobei die Zusammensetzung gleich oder verschieden ist von der der Basisschicht.

Die Herstellung der Polyester kann z. B. nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salze polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung enthält sphärische Partikel zur Erzeugung der gewünschten Oberflächeneigenschaften und Optik.

Die sphärischen Partikel sind in der Folie in einer Menge von $\geq 2,5$ Gew.-%, bevorzugt $\geq 3,0$ Gew.-%, besonders bevorzugt $\geq 3,5$ Gew.-% (bezogen auf das Gesamtgewicht der Folie) enthalten. Wenn die Folie mehrschichtig ist, dann ist die angegebene Menge an sphärischen Partikeln zumindest in einer äußeren Schicht enthalten. Sind weniger als 2,5 Gew.-% vorhanden, so ist der Glanz der Folie zu hoch. Bevorzugt weisen die sphärischen Partikel eine mittlere Teilchengröße ($d_{50}$) von $\geq 5,0$ $\mu m$, bevorzugt $\leq 5,5$ $\mu m$ und besonders bevorzugt $\geq 6,0$ $\mu m$ auf. Sind die Partikel kleiner als 5,0 $\mu m$, so ist die Rauheit zu niedrig und der Glanz zu hoch. Die Ausdehnung der sphärischen Partikel sollte in alle Raumrichtung ungefähr gleich groß sein, d. h. das Verhältnis von Länge zu Breite zu Höhe sollte nahe bei 1:1:1 liegen, bevorzugt bei (0,9-1,1):(0,9-1,1):1.

Die sphärischen Partikel sind bevorzugt organisch und können beispielsweise aus Melamin-Formaldehyd-Harz, Benzoguanamin-Formaldehyd-Harz oder einem Epoxyharz bestehen.

Die organischen Partikel können aus ungesättigten Monomeren wie Ester der Acryl- und Methacrylsäure wie Methylmethacrylat, Ester ungesättigter Dicarbonsäuren wie Maleinsäuredialkylester, ungesättigten Vinylverbindungen wie Styrol, ungesättigten Nitrilen wie Acrylnitril, funktionellen Monomeren wie ungesättigte Carbonsäuren, hydroxylhaltigen Monomeren wie Hydroxyethylmethacrylat, epoxidgruppenhaltigen Monomeren wie Glycidylmethacrylat, ungesättigten Sulfonsäuren u. a. aufgebaut sein. Bevorzugt sind die organischen Partikel vernetzt. Beispiele für vernetzende ungesättigte Monomere sind Diallylphthalat, Divinylbenzol u. a..

Die sphärischen Partikel können Siloxan-basiert sein und aus Verbindungen wie Polymethylsilsesquioxane bestehen.

Der Vernetzungsgrad der Partikel kann durch die Zusammensetzung der entsprechenden Komponenten in weiten Grenzen variiert werden.

Wesentlich ist, dass die Partikel während der Folienherstellung nicht schmelzbar ($T_m > 300$ °C) und nicht im Polymer löslich sind und die Form und Größe erhalten bleibt (Verhältnis von Länge zu Breite zu Höhe sollte nahe bei 1:1:1 liegen).

Die Größe und Größenverteilung der sphärischen Partikel bewirken, dass die mittlere Rauheit ($R_a$) der Folie $\geq 0,65$ $\mu m$, bevorzugt $\geq 0,7$ $\mu m$ und besonders bevorzugt $\leq 0,8$ $\mu m$ ist. Die höchste Erhebung auf der Folie ($R_p$) ist $\leq 15$ $\mu m$, bevorzugte 12 $\mu m$ und besonders bevorzugt $\leq 10$ $\mu m$. Ist sie größer als 15 $\mu m$, so kommt es zu Problemen bei der Verstreckung der Folie. Die Gesamtzahl der Erhebungen auf der Oberfläche der Folie, die $\geq 6,0$ $\mu m$ sind, ist größer 10 pro $mm^2$, bevorzugt größer 20 pro $mm^2$ und besonders bevorzugt größer 30 pro $mm^2$. Ist sie kleiner als 10 pro $mm^2$, so führt dies zu Problemen bei der Verarbeitung, z. B. beim Beschichten, da die Rauheit nicht homogen ist.

Die Folie kann neben den sphärischen Partikeln noch zusätzlich übliche Additive wie beispielsweise Stabilisatoren enthalten. Als Stabilisatoren werden vorteilhaft beispielsweise Phosphorverbindungen wie Phosphorsäure oder Phosphorsäureester eingesetzt. Weitere Partikel, die die Oberflächen- und rheologischen Eigenschaften der Folie beeinflussen, sind in der erfindungsgemäßen Folie bevorzugt nicht vorhanden.

Die Dicke der erfindungsgemäßen Polyesterfolie kann innerhalb bestimmter Grenzen variieren. Sie liegt vorteilhaft im Bereich von 12 bis 500 $\mu m$, insbesondere von 15 bis 350 $\mu m$, vorzugsweise von 20 bis 250 $\mu m$.

Ist die Folie mehrschichtig aufgebaut, können die sphärischen Partikel in allen Deckschichten enthalten sein.

**Herstellungsverfahren:**

Die Erfindung betrifft auch ein Verfahren zur Herstellung der erfindungsgemäßen Polyesterfolie nach dem an sich aus der Literatur bekannten Extrusionsverfahren (s. z. B.: "Handbook of Thermoplastic Polyesters, Ed. S. Fakirov, Wiley-VCH, 2002" oder im Kapitel "Polyesters, Films" in der "Encyclopedia of Polymer Science and Engeneering, Vol. 12, John Wiley & Sons, 1988").

Im Rahmen dieses Verfahrens wird so vorgegangen, dass die der Folie entsprechende Schmelze durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

**Detailbeschreibung des Verfahrens**

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann gleichzeitig durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt.

Die biaxiale Streckung wird im Allgemeinen sequentiell durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird. Die Temperatur, bei der die Streckung durchgeführt wird, kann in einem relativ großen Bereich variieren und richtet sich nach den gewünschten Eigenschaften der Folie. Im Allgemeinen wird die Längsstreckung bei einer Temperatur im Bereich von 80 bis 130 °C und die Querstreckung bei einer Temperatur im Bereich von 80 bis 150 °C durchgeführt. Das Längsstreckverhältnis liegt allgemein im Bereich von 2,5:1 bis 4,5:1, bevorzugt von 3:1 bis 4:1. Das Querstreckverhältnis liegt allgemein im Bereich von 2,5:1 bis 4,5:1, bevorzugt von 3:1 bis 4:1.

Bei der nachfolgenden Thermofixierung wird die Folie über eine Zeitdauer von etwa 0,1 bis 10 s bei einer Temperatur im Bereich von 150 bis 250 °C gehalten. Anschließend wird die Folie in üblicher Weise aufgewickelt.

Nach der biaxialen Streckung können eine oder beide Oberfläche/n der Folie nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Bei der Herstellung der erfindungsgemäßen Folie ist gewährleistet, dass das Verschnittmaterial (Regenerat) in einer Menge im Bereich von bis zu 70 Gew.-%, bezogen auf das Gesamtgewicht der Folie, wieder der Extrusion zugeführt werden kann, ohne dass dabei die physikalischen Eigenschaften der Folie nennenswert negativ beeinflusst werden, insbesondere nicht ihr optisches Erscheinungsbild und die Rauigkeit.

Die erfindungsgemäße Folie zeichnet sich durch einen niedrigen Glanz und eine gleichmäßige, hohe Rauigkeit aus. Die folgende Tabelle 1 gibt die Eigenschaften der erfindungsgemäßen Folien wider.

**Tabelle 1**

| Folieneigenschaften | bevorzugter Bereich | besonders bevorzugt | ganz besonders bevorzugt | Einheit | Messmethode |
|---|---|---|---|---|---|
| Gehalt an sphärischen Partikeln | $\geq 2,5$ | $\geq 3,0$ | $\geq 3,5$ | Gew.-% | |
| Größe sphärische Partikel ($d_{50}$) | $\geq 5,0$ | $\geq 5,5$ | $\geq 6,0$ | $\mu m$ | |

(fortgesetzt)

| Folieneigenschaften | bevorzugter Bereich | besonders bevorzugt | ganz besonders bevorzugt | Einheit | Messmethode |
|---|---|---|---|---|---|
| Mittlere Rauheit ($R_a$) | $\geq 0{,}65$ | $\geq 0{,}7$ | $\geq 0{,}8$ | $\mu$m | |
| Höchste Erhebung ($R_p$) | <15 >7 | $\leq 12$ $\geq 7{,}5$ | <10 $\geq 8$ | $\mu$m | |
| Anzahl der Erhebungen $\geq 6{,}0$ $\mu$m | >10 | >20 | >30 | 1/mm$^2$ | |
| Transparenz | $\geq 50$ | $\geq 60$ | $\geq$ | % | ASTM-D 1003-00 |
| Glanz (60° und 85°) | $\leq 50$ | $\leq 40$ | $\leq 30$ | | DIN 67 530 |

Die beschriebenen Folien werden beispielsweise als Trennfolien verwendet. Besonders geeignet sind dehäsiv beschichtete Folien für die Herstellung von Prepregs. Prepreg bezeichnet ein Halbzeug, bestehend aus Endlosfasern und einer ungehärteten duroplastischen Kunststoffmatrix, das vor allem im Leichtbau Verwendung findet. Die Endlosfasern können als reine unidirektionale Schicht, als Gewebe oder Gelege vorliegen. Prepreg wird bahnförmig, auf Rollen gewickelt, geliefert. Die Folie dient als Träger im Herstellungsprozess und als Trennlage zwischen den einzelnen Schichten. Die beschriebene Folie hat gegenüber den bisher vorwiegend eingesetzten silikonisierten Papieren den Vorteil einer deutlich höheren Reißfestigkeit. Die Dehäsionsschicht der Folie kann als Hauptbestandteil natürliche oder synthetische Wachse enthalten. Bespiele für natürliche Wachse sind Carnauba- und Montanwachse. Beispiele für synthetische Wachse sind Polyolefinwachse und Polytetrafluorethylenwachse, die als Dispersion oder Emulsion eingesetzt werden. Zur Verankerung der Wachse kann die Beschichtung zusätzlich Bindemittel wie Acrylate oder Polyurethane enthalten.

Die Dehäsionsschicht kann auch eine Silikonbeschichtung sein wie sie beispielsweise in der EP-B-536 766 beschrieben wird.

Aufgrund ihrer Eigenschaften eignen sich die erfindungsgemäßen Folien zur Erzeugung von gleichmäßigen rauen Oberflächen auf verschiedenen Substraten.

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN EN ISO 1628-2, Ausgabe November 1999 (ersetzt DIN 53 726), an einer 1,0 Gew.-%igen Lösung des Polymers in Dichloressigsäure (DCE) bei einer Temperatur von 25 $\pm$ 0,05 °C gemessen.

Die intrinsische Viskosität (IV) berechnet sich wie folgt aus der Standardviskosität

$$\text{IV (DCE)} = 6{,}907 \cdot 10^{-4} \, \text{SV (DCE)} + 0{,}063096 \quad [\text{dl/g}]$$

**Glanz**

Der Glanz wird nach DIN 67 530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 60° und 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

**Messung des mittleren Durchmessers $d_{50}$**

Die Bestimmung des mittleren Durchmessers $d_{50}$ wird mittels Laser auf einem Malvern Master Sizer nach der Standardmethode durchgeführt (andere Messgeräte sind z. B. Horiba LA 500 oder Sympathec Helos, welche das gleiche Messprinzip verwenden). Die Proben werden dazu in eine Küvette mit Wasser gegeben und diese dann in das Messgerät gestellt. Der Messvorgang ist automatisch und beinhaltet auch die mathematische Bestimmung des $d_{50}$-Wertes.

Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse sofort den gewünschten $d_{50}$-Wert.

**Topographie**

Die Topographie der Oberfläche wird mit einem Weißlicht-Interferometrie-Mikroskop der Firma Veeco, Typ Wyko NT3300, bestimmt. Gemessen wird eine Fläche von 0,92 $\mu$m · 1,21 mm (480 · 736 Pixel) bei 5,1-facher Vergrößerung. Zur Messung wird ein Folienstück von 10 · 10 cm Größe auf den Tisch des Mikroskops gelegt und zur Fixierung mit einem Metallring mit einem Durchmesser von 5 cm beschwert. Die Messung erfolgt im VSI-Modus (phase shifting interferometry). Die Messlänge in z-Richtung wird auf 20 $\mu$m festgelegt. Eine eventuelle Welligkeit des Musters wird herausgefiltert. Fehlende Messwerte an den Flanken der Erhebungen werden rechnerisch ergänzt (data restore).

$R_a$ ist der arithmetische Mittelwert der Beträge aller Profilwerte, gemessen von der berechneten Mittelebene:

$$R_a = \frac{1}{MN} \sum_{j=1}^{N} \sum_{i=1}^{M} |Z_{ij}|$$

wobei N und M die Datenpunkte in x- und y-Richtung und Z den Wert in z-Richtung (Höhe) darstellt.

Die maximale Erhebung $R_p$ ist der Abstand von der berechneten Mittelebene (Mittelwert aller Messpunkte) zum höchsten Punkt.

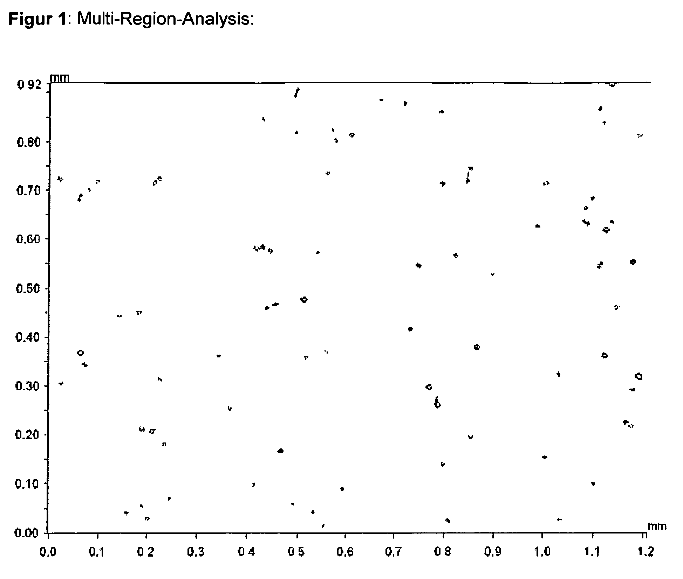

Zur Analyse der Erhebungen wird die so genannte Multi-Region-Analysis verwendet. Hierbei wird die Messfläche nach zusammenhängenden Regionen untersucht, die höher als 6 $\mu$m sind. Allerdings werden nur Regionen berücksichtigt, die eine Größe von mindestens 10 Bildpunkten haben. Ein Beispiel ist in Figur 1 gezeigt.

**Transparenz**

Die Messung an den Polyesterfolien erfolgt am Hazegard Hazemeter XL-211 der Fa. BYK Gardner nach ASTM-D 1003-00.

Im Folgenden wird die Erfindung anhand von Beispielen näher erläutert.

**Beispiel 1**

Chips aus Polyethylenterephthalat wurden getrocknet und dem Extruder zugeführt. Dann wurde durch Extrusion und anschließende stufenweise Orientierung in Längs- und Querrichtung eine einschichtige Folie mit einer Gesamtdicke von 30 $\mu$m hergestellt.

Folie, Mischung aus:

95 Gew.-%  Polyethylenterephthalat mit einem SV-Wert von 800

5 Gew.%  organischen Partikeln aus vernetztem PMMA (Epostar MA1010, Nippon Shokubai, Japan) mit einem $d_{50}$-Wert von 8,56 $\mu$m

Die Herstellungsbedingungen in den einzelnen Verfahrensschritten waren:

| | | | |
|---|---|---|---|
| Extrusion: | Temperaturen | 290 | °C |
| | Temperatur der Abzugswalze | 30 | °C |
| Längsstreckung: | Temperatur: | 80-126 | °C |
| | Längsstreckverhältnis: | 3,5 | |
| Querstreckung: | Temperatur: | 80-135 | °C |
| | Querstreckverhältnis | 3,8 | |
| Fixierung: | Temperatur: | 230 | °C |
| | Dauer: | 3 | s |

Die Folie hatte die geforderte gleichmäßige hohe Rauigkeit und niedrigen Glanz. Die erzielten Eigenschaften der Folie sind in der Tabelle 2 widergegeben.

**Beispiel 2**

Im Vergleich zu Beispiel 1 wurde die Zusammensetzung der Folie wie folgt geändert:

Folie, Mischung aus:

95,5 Gew.-%     Polyethylenterephthalat mit einem SV-Wert von 800
4,5 Gew.-%      organischen Partikeln aus Polymethylsilsesquioxan (E+ 710, ABC Nanotech, Korea) mit einem $d_{50}$-Wert von 8,27 $\mu$m

Die mittlere Rauigkeit der Folie war gegenüber Beispiel 1 etwas höher, der Glanz war niedriger.

**Vergleichsbeispiel 1**

Im Vergleich zu Beispiel 1 wurde die Zusammensetzung der Folie wie folgt geändert:

Folie, Mischung aus:

97 Gew.%     Polyethylenterephthalat mit einem SV-Wert von 800
3 Gew.-%     Kieselsäurepartikeln (Sylysia 440, Fuji Silysia, Japan) mit einem $d_{50}$-Wert von 6,18 $\mu$m

Eine Folie mit mehr als 3 % Kieselsäurepartikeln konnte nicht verfahrenssicher hergestellt werden. Weiterhin musste das Längsstreckverhältnis auf 3,2 reduziert werden.

**Tabelle 2**

| Beispiel | Foliendicke [µm] | $d_{50}$-Wert sphärische Partikel in Folie [µm] | Konzentration sphärische Partikel [Gew.-%] | Mittlere Rauheit $R_a$ [µm] | Höchste Erhebung $R_p$ [µm] | Anzahl der Erhebungen >6,0 µm | Transparenz [%] | Glanz bei 60° | Glanz bei 85° |
|---|---|---|---|---|---|---|---|---|---|
| B 1 | 30 | 8,56 | 5 | 1,2 | 9,2 | 68 | 91 | 19 | 12 |
| B 2 | 30 | 8,27 | 4,5 | 1,4 | 8,7 | 74 | 77 | 16 | 8 |
| VB 1 | 30 | 6,18 | 3 | 0,7 | 6,1 | 3 | 75 | 22 | 28 |

**Patentansprüche**

1. Ein- oder mehrschichtige, biaxial orientierte Polyesterfolie, umfassend mindestens eine außen liegende Schicht, die sphärische, organische Partikel in einer Konzentration von $\geq$ 2,5 Gew.-%, bezogen auf das Gewicht dieser außen liegenden Schicht, enthält, wobei die Größe der sphärischen Partikel ($d_{50}$) $\geq$ 5,0 $\mu$m (Bestimmt nach der Methode in der Beschreibung) beträgt.

2. Polyesterfolie nach Anspruch 1, **dadurch gekennzeichnet, dass** das Verhältnis von Länge zu Breite zu Höhe der sphärischen Partikel bei (0,9-1,1): (0,9-1,1):1 (Bestimmt nach der Methode in der Beschreibung) liegt.

3. Polyesterfolie nach Anspruch 1 oder 2, **dadurch gekennzeichnet, dass** die mittlere Rauheit ($R_a$) der Folie $\geq$ 0,65 $\mu$m (Bestimmt nach der Methode in der Beschreibung) beträgt.

4. Polyesterfolie nach Anspruch 1, 2 oder 3, **dadurch gekennzeichnet, dass** die höchste Erhebung auf der Folie ($R_p$) $\leq$ 15 $\mu$m (Bestimmt nach der Methode in der Beschreibung) beträgt.

5. Polyesterfolie nach einem der Ansprüche 1 bis 4, **dadurch gekennzeichnet, dass** die höchste Erhebung auf der Folie ($R_p$) $\geq$ 7 $\mu$m (Bestimmt nach der Methode in der Beschreibung) beträgt.

6. Polyesterfolie nach einem der Ansprüche 1 bis 5, **dadurch gekennzeichnet, dass** die Zahl der Erhebungen auf der Oberfläche der Folie, die $\geq$ 6,0 $\mu$m sind, größer 10 pro mm$^2$ (Bestimmt nach der Methode in der Beschreibung) ist.

7. Polyesterfolie nach einem der Ansprüche 1 bis 6, **dadurch gekennzeichnet, dass** die Größe der sphärischen Partikel ($d_{50}$) $\leq$ 15 $\mu$m (Bestimmt nach der Methode in der Beschreibung)

8. Polyesterfolie nach einem der Ansprüche 1 bis 7, **dadurch gekennzeichnet, dass** die Transparenz der Folie $\geq$ 50 % (gemessen nach ASTM-D 1003-00) ist.

9. Polyesterfolie nach einem der Ansprüche 1 bis 8, **dadurch gekennzeichnet, dass** die sphärischen, organischen Partikel aus Melamin-Formaldehyd-Harz, Benzoguanamin-Formaldehyd-Harz oder einem Epoxyharz bestehen.

10. Polyesterfolie nach einem der Ansprüche 1 bis 9, **dadurch gekennzeichnet, dass** der Glanz der Folie, gemessen bei 60° und 85°, $\leq$ 50 (gemessen nach DIN 67 530, in Anlehnung an ASTM-D 523-78 und ISO 2813)

11. Polyesterfolie nach einem der Ansprüche 1 bis 10, **dadurch gekennzeichnet, dass** die Folie einschichtig ist.

12. Verfahren zur Herstellung einer Folie nach Anspruch 1, wobei die der Folie entsprechende Schmelze durch eine Flachdüse extrudiert wird, die so erhaltene Vorfolie zur Verfestigung auf einer oder mehreren Walze/n abgezogen wird, die Vorfolie anschließend biaxial gestreckt (orientiert), die biaxial gestreckte Folie thermofixiert und aufgerollt wird, wobei mindestens eine Oberflächenschicht sphärische Partikel in einer Konzentration von $\geq$ 2,5 Gew.-%, bezogen auf das Gewicht dieser Oberflächenschicht, enthält und wobei die Größe der sphärischen Partikel ($d_{50}$) $\geq$ 5,0 $\mu$m (Bestimmt nach der Methode in der Beschreibung) beträgt.

13. Verfahren nach Anspruch 12, wobei die Folie beschichtet wird.

14. Verfahren nach Anspruch 13, wobei die Folie mit einer Silikonbeschichtung beschichtet wird.

15. Verwendung einer Folie nach Anspruch 1 im industriellen Sektor, insbesondere als Trennfolie für die Herstellung von Prepregs.

**Claims**

1. A single- or multilayer, biaxially oriented polyester film, encompassing at least one external layer which comprises spherical, organic particles at a concentration of $\geq$ 2.5 % by weight, based on the weight of said external layer, where the size of the spherical particles ($d_{50}$) is $\geq$ 5.0 $\mu$m (determined by the method in the Description).

2. The polyester film as claimed in claim 1, wherein the ratio of length to width to height of the spherical particles is (0.9-1.1):(0.9-1.1):1 (determined by the method in the Description).

3. The polyester film as claimed in claim 1 or 2, the average roughness ($R_a$) of which is $\geq 0.65$ $\mu$m (determined by the method in the Description).

4. The polyester film as claimed in claim 1, 2, or 3, the highest elevation on which (Rp) is $\leq 15$ $\mu$m (determined by the method in the Description).

5. The polyester film as claimed in any of claims 1 to 4, the highest elevation on which (Rp) is $\geq 7$ $\mu$m (determined by the method in the Description).

6. The polyester film as claimed in any of claims 1 to 5, the number of elevations $\geq 6.0$ $\mu$m on the surface of which is greater than 10 per mm$^2$ (determined by the method in the Description).

7. The polyester film as claimed in any of claims 1 to 6, wherein the size of the spherical particles ($d_{50}$) is $\leq 15$ $\mu$m (determined by the method in the Description).

8. The polyester film as claimed in any of claims 1 to 7, the transparency of which is $\geq 50$ % (measured in accordance with ASTM D1003-00).

9. The polyester film as claimed in any of claims 1 to 8, wherein the spherical, organic particles are composed of melamine-formaldehyde resin, benzoguanamine-formaldehyde resin, or an epoxy resin.

10. The polyester film as claimed in any of claims 1 to 9, the gloss of which is $\leq 50$, measured at 60 ° and 85 (measured in accordance with DIN 67 530, with reference to ASTM D523-78 and ISO 2813).

11. The polyester film as claimed in any of claims 1 to 10, which is a single-layer film.

12. A process for producing a film as claimed in claim 1, where the melt corresponding to the film is extruded through a flat-film die, the resultant prefilm is drawn off on one or more rolls for solidification, the prefilm is then biaxially stretched (oriented), and the biaxially stretched film is heat-set and wound up, where at least one surface layer comprises spherical particles at a concentration of $\geq 2.5$ % by weight, based on the weight of said surface layer, where the size of the spherical particles ($d_{50}$) is $\geq 5.0$ $\mu$m (determined by the method in the Description).

13. The process as claimed in claim 12, where the film is coated.

14. The process as claimed in claim 13, where the film is coated with a silicone coating.

15. The use of a film as claimed in claim 1 in the industrial sector, in particular as release film for the production of prepregs.

**Revendications**

1. Feuille de polyester monocouche ou multicouche, orientée de manière biaxiale, comprenant au moins une couche se trouvant à l'extérieur qui contient des particules organiques sphériques en une concentration de $\geq 2,5\%$ en poids par rapport au poids de cette couche se trouvant à l'extérieur, dans laquelle la taille des particules sphériques ($d_{50}$) est $\geq 5,0$ $\mu$m (déterminée selon la méthode indiquée dans la description).

2. Feuille de polyester selon la revendication 1, **caractérisée en ce que** le rapport de longueur à largeur à hauteur des particules sphériques est de (0,9 à 1,1) : (0,9 à 1,1) : 1 (déterminé selon la méthode indiquée dans la description).

3. Feuille de polyester selon la revendication 1 ou 2, **caractérisée en ce que** la rugosité moyenne ($R_a$) de la feuille est $\geq 0,65$ $\mu$m (déterminée selon la méthode indiquée dans la description).

4. Feuille de polyester selon la revendication 1, 2 ou 3, **caractérisée en ce que** l'élévation la plus importante ($R_p$) de la feuille est $\geq 15$ $\mu$m (déterminée selon la méthode indiquée dans la description).

5. Feuille de polyester selon l'une des revendications 1 à 4, **caractérisée en ce que** l'élévation la plus importante ($R_p$)

de la feuille est $\geq 7 \mu$m (déterminée selon la méthode indiquée dans la description).

6. Feuille de polyester selon l'une des revendications 1 à 5, **caractérisée en ce que** le nombre d'élévations sur la surface de la feuille qui sont $\geq 6,0 \mu$m, est supérieur à 10 par mm$^2$ (déterminé selon la méthode indiquée dans la description).

7. Feuille de polyester selon l'une des revendications 1 à 6, **caractérisée en ce que** la taille des particules sphériques ($d_{50}$) est $\leq 15 \mu$m (déterminée selon la méthode indiquée dans la description).

8. Feuille de polyester selon l'une des revendications 1 à 7, **caractérisée en ce que** la transparence de la feuille est $\geq 50\%$ (mesurée selon la norme ASTM-D 1003-00).

9. Feuille de polyester selon l'une des revendications 1 à 8, **caractérisée en ce que** les particules organiques sphériques sont constituées d'une résine de mélamine-formaldéhyde, d'une résine de benzoguanamine-formaldéhyde ou d'une résine époxy.

10. Feuille de polyester selon l'une des revendications 1 à 9, **caractérisée en ce que** le brillant de la feuille, mesuré à 60° et 85° est $\leq 50$ (mesuré selon la norme DIN 67 530, sur la base des normes ASTM-D 523-78 et ISO 2813).

11. Feuille de polyester selon l'une des revendications 1 à 10, **caractérisée en ce que** la feuille est monocouche.

12. Procédé de production d'une feuille selon la revendication 1, dans lequel la masse fondue correspondant à la feuille est extrudée par une buse plate, la feuille préformée ainsi obtenue est tirée sur un ou plusieurs rouleau(x) pour la renforcer, la feuille préformée est ensuite étirée de façon biaxiale (orientée), la feuille étirée de façon biaxiale est thermofixée et enroulée, dans lequel au moins une couche de surface contient des particules sphériques en une concentration de $\geq 2,5\%$ en poids par rapport au poids de cette couche de surface et dans lequel la taille des particules sphériques ($d_{50}$) est $\geq 5,0 \mu$m (déterminée selon la méthode indiquée dans la description).

13. Procédé selon la revendication 12, dans lequel la feuille est revêtue.

14. Procédé selon la revendication 13, dans lequel la feuille est revêtue d'une couche de silicone.

15. Utilisation d'une feuille selon la revendication 1 dans le secteur industriel, en particulier comme feuille de séparation pour la fabrication d'un produit pré-imprégné.

**Figur 1**: Multi-Region-Analysis:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3154461 A
- EP 1197326 A
- DE 3019073 A
- EP 0188198 A
- EP 536766 B

**In der Beschreibung aufgeführte Nicht-Patentliteratur**

- Handbook of Thermoplastic Polyesters. Wiley-VCH, 2002
- Polyesters, Films. Encyclopedia of Polymer Science and Engeneering. John Wiley & Sons, 1988, vol. 12